# EUROPEAN PATENT APPLICATION

(11) **EP 2 869 550 A1**
(43) Date of publication of application: **06.05.2015**
(21) Application number: 14191118.0
(22) Date of filing: 30.10.2014
(51) Int. Cl.: H04N 5/225, G02B 5/20

(54) **Image capture assembly, digital camera and a mobile device having an improved construction**

(30) Priority: 30.10.2013 US 201314066896
(71) Applicant: BlackBerry Limited, Waterloo, ON N2K 0A7 (CA)
(72) Inventor: GRANDIN, Thomas Guillaume, Waterloo, Ontario N2K 0A7 (CA); CHOI, Yun Seok, Waterloo, Ontario N2K 0A7 (CA); WEBER, Arnett Ryan, Waterloo, Ontario N2K 0A7 (CA)
(74) Representative: Patel, Binesh

(57) **Abstract**

The present disclosure discloses an image capture assembly, digital camera and a mobile device having an improved construction. In one example embodiment, there is provided an image capture assembly, comprising: a lens; an image sensor; an optical grade plate disposed between the lens and the image sensor, wherein the plate comprises a substrate which material is selected from poly(methyl methacrylate) (PMMA) and sapphire glass; and an image signal processor coupled to the image sensor, wherein the image signal processor is configured to process data provided by the image sensor to generate a digital image.

## Description

### TECHNICAL FIELD

The present disclosure relates to digital cameras, and more particularly to an image capture assembly, digital camera and a mobile device having an improved construction.

### BACKGROUND

Digital cameras typically include an image sensor made from silicon which is sensitive to both visible and near-infrared light. To provide a natural looking image, infrared light should be filtered out so that only visible light reaches the image sensor. Digital cameras designed for color photography typically include an IR filter, also known as an IR-cut or IR-blocking filter, which reflects, absorbs or blocks most wavelengths of near-infrared light to which the image sensor is sensitive while passing most wavelengths of visible IR light.

The IR filter is commonly made of an optical grade glass plate with parallel surfaces enhanced with proper coatings. The optical grade glass plate may be perfectly transparent in the visible light range or may be tinted so that it absorbs certain wavelengths of the visible light. In the camera, the IR filter is commonly located between the lens and the image sensor, close to the image sensor so that it also plays a role of sensor protection during the camera manufacture and over the lifetime of the camera. In some rare cases when the IR filter is moved to another location or completely removed from the camera, it is still interesting to have such a protective plate on top of the sensor in that case this plate is assumed not to have any optical function.

The thickness of the camera is one of the main determinants of the overall thickness of the host electronic device. Accordingly, a thinner IR filter allows a thinner camera and, therefore, a thinner host electronic device to be produced. However, reducing the thickness of the IR filter can reduce the reliability of the IR filter and may degrade its optical properties and effectiveness at filtering IR light. Accordingly, there is a need for an IR filter having improved physical characteristics while retaining effective optical properties.

### BRIEF DESCRIPTION OF THE DRAWINGS

Figure 1 is a block diagram illustrating a portable electronic device suitable for carrying out example embodiments of the present disclosure.
Figure 2 is a block diagram illustrating an image capture assembly in accordance with example embodiments of the present disclosure.
Figure 3 is a graph illustrating the transmittance of a reflective IR filter and an absorptive IR filter of an image capture assembly.
Figure 4 is a graph illustrating the transmittance of a first substrate for use in an IR filter in accordance with example embodiments of the present disclosure.
Figure 5 is a graph illustrating the transmittance of a second substrate for use in an IR filter in accordance with example embodiments of the present disclosure.

### DETAILED DESCRIPTION

Reference will now be made to the accompanying drawings which show example embodiments of the present disclosure. For simplicity and clarity of illustration, reference numerals may be repeated among the Figures to indicate corresponding or analogous elements. Numerous details are set forth to provide an understanding of the example embodiments described herein. The example embodiments may be practised without some of these details. In other instances, well-known methods, procedures, and components have not been described in detail to avoid obscuring the example embodiments described. The description is not to be considered as limited to the scope of the example embodiments described herein.

The present disclosure provides a digital camera having an improved construction. In some aspects, the present disclosure provides an improved IR filter, a digital camera integrating the improved IR filter, and a mobile device including a digital camera integrating the improved IR filter. The improved IR filter of the present disclosure is made of a material less brittle than conventional IR filters, is thinner than conventional IR filters, and is more reliable and more durable than conventional IR filters. The improved IR filter of the present disclosure allows a digital camera and a host electronic device to be constructed which is smaller and more robust than conventional equivalents.

In accordance with one embodiment of a first aspect of the present disclosure, there is provided an image capture assembly, comprising: a lens; an image sensor; an infrared filter disposed between the lens and the image sensor, wherein the infrared filter comprises a substrate selected from poly(methyl methacrylate (PMMA) and sapphire glass, wherein the substrate has a reflective coating on a first side disposed towards the lens and an anti-reflective coating on a second side disposed towards the image sensor; an image signal processor coupled to the image sensor, wherein the image signal processor is configured to process data provided by the image sensor to generate a digital image. In some examples, the reflective coating is a multilayer coating comprising a periodic layer system composed from two materials, one material with a high index selected from the group consisting of zinc sulfide (ZnS) and titanium dioxide (TiO₂), and the other material having a low index material selected from the group consisting of magnesium fluoride (MgF₂) and silicon dioxide (SiO₂). In other examples, the anti-reflective coating is a single layer coating of a low index material such as MgF₂.

In accordance with another embodiment of the first aspect of the present disclosure, there is provided an image capture assembly, comprising: a lens; an image sensor; an optical grade plate disposed between the lens and the image sensor, wherein the plate comprises a substrate which material is selected from PMMA and sapphire glass; and an image signal processor coupled to the image sensor, wherein the image signal processor is configured to process data provided by the image sensor to generate digital image data such as a digital image.

In accordance with a second aspect of the present disclosure, there is provided a digital camera including an image capture assembly of the present disclosure.

In accordance with a third aspect of the present disclosure, there is provided a mobile communication device including a processor coupled to an image capture assembly of the present disclosure.

### Image Capture Assembly

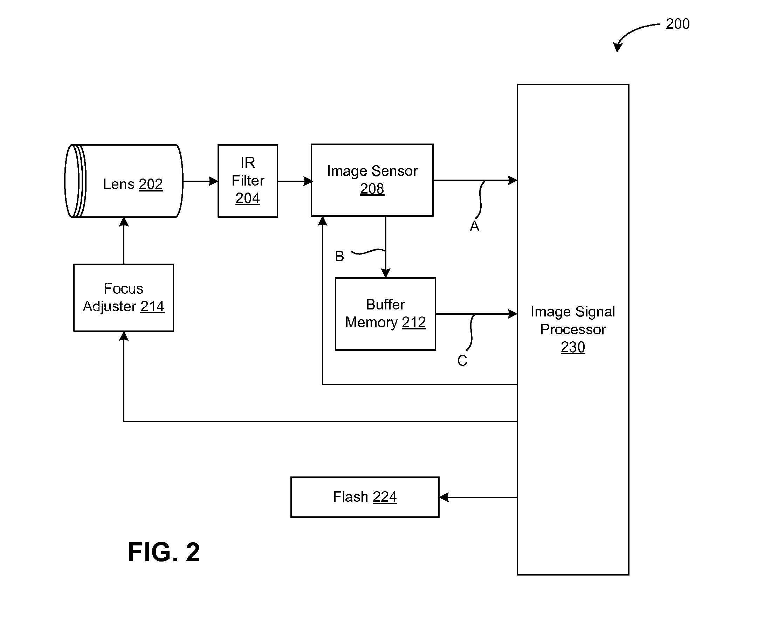

Reference is first made to Figure 2 which illustrates an image capture assembly 200 in accordance with an example embodiment of the present disclosure. The image capture assembly 200 can be incorporated within a host electronic device 100, such as a digital camera or mobile phone, as described in more detail below. The host electronic device 100 could have more than one image capture assembly 200, for example, if more than one digital camera is provided by the host electronic device 100. The host electronic device 100 could provide, for example, front and rear facing digital cameras. The front and rear facing digital cameras will typically have the same or similar construction, but could differ in some respects, such as the pixel density of the image sensor.

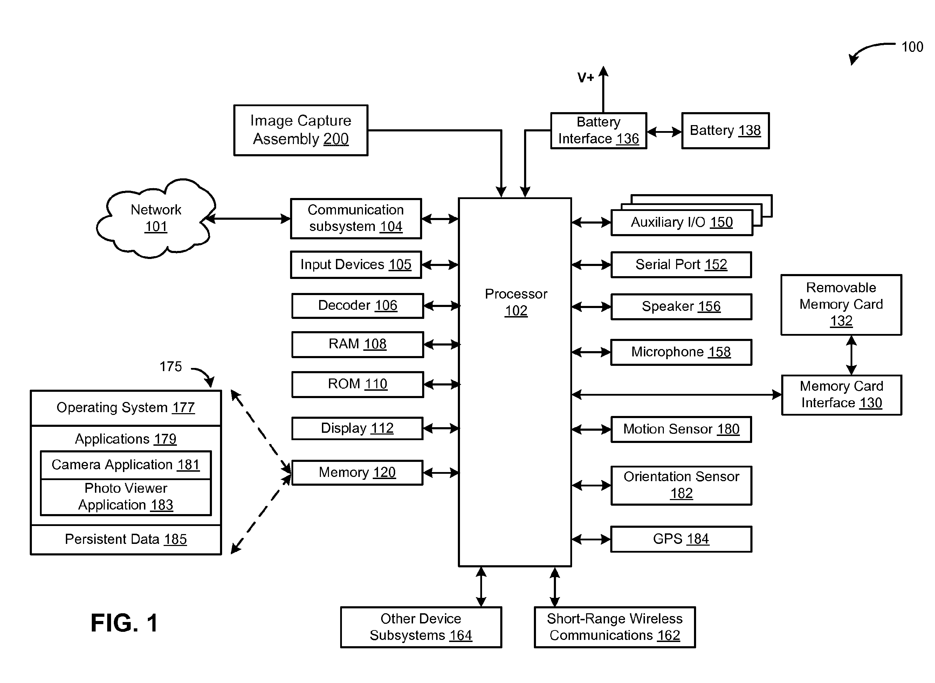

The image capture assembly 200 includes an image signal processor 230 which performs various image processing functions described below. The image signal processor 230 is typically a programmable image signal processor but could be, for example, a hard-wired custom integrated circuit (IC) processor, a general purpose microprocessor, or a combination of hard-wired custom IC and programmable processors. When the image capture assembly 200 is part of a multipurpose portable electronic device such as a smartphone, at least some of the functions of the image capture assembly 200 may be performed by the main processor 102 (Figure 1) of the host electronic device 100. It is contemplated that all of the functions performed by the image signal processor 230 could be performed by the main processor 102, in which case the image signal processor 230 can be omitted. Furthermore, the image capture assembly 200 has access to various components of the host electronic device 100, and can receive inputs from and send outputs to various components of the host electronic device 100, input such as the input devices 105, motion sensor 180, orientation sensor 182, GPS 184, RAM 108, persistent memory 120 and the like (See, Figure 1).

The image capture assembly 200 in the described embodiment includes a lens 202 and an image sensor 208 which receives light received by the lens 202. The lens 202 position may be controlled using a focus adjuster 214, such as focusing actuator, in order to adjust the focusing distance. In other embodiments the lens 202 may be fixed at a certain position during the camera manufacture so that the focusing distance is not adjustable.

Light received by the lens 202 passes through an IR filter 204 before reaching the image sensor 208. The IR filter 204 reflects or blocks most, if not all, wavelengths of near-infrared light to which the image sensor 208 is sensitive while passing most, if not all, wavelengths of visible IR light. The light transmitted by the IR filter 204 is then sensed by an image sensor 208. The image sensor 208 receives and converts optical images into electronic signals that convey image information.

The image sensor 208 comprises a number of sensor elements (not shown) and may have a number of aspect ratios, such as a 4:3 and 16:9 image aspect ratios, and may have a number of image resolutions. In at least some embodiments, the image sensor 208 is capable of capturing color information to produce a color image. For example, the image sensor 208 may include a color filter array. The color filter array is a mosaic of small color filters placed over pixels of the image sensor to capture color information. The color filters filter light from a scene by wavelength range so that filtered wavelengths that provide corresponding color information are captured by different pixels on the image sensor 208. That is, a particular type of color information may be captured at a pixel of the image sensor 208 based on the overlaying color filter. Accordingly, only a certain amount of incoming light is captured by the image sensor as the pixels only receive portions of light that have been filtered based on color. For example, for the commonly implemented Bayer filter which is a mosaic of Red-Green-Green-Blue filters (i.e. a filter pattern of 50% green, 25% red and 25% blue), only one of these three primary colours in incoming light is captured at each pixel. In at least some example embodiments, other types of color filter arrays may be implemented such as a Red-Green-Blue-Emerald filter, Cyan-Yellow-Yellow-Magenta filter, Cyan-Yellow-Green-Magenta filter, etc. Alternatively, a separate color filter (not shown) may be used in other embodiments.

In some embodiments, the image sensor 208 is a charge-coupled device (CCD) sensor; however, a complementary metal-oxide semiconductor (CMOS) sensor or other suitable image sensor could be used in other embodiments. In some embodiments, an adjustable aperture and shutter assembly (not shown) in the lens 202 is used to control the aperture size and the exposure time of the image sensor 208. In other embodiments, the aperture and shutter assembly could be omitted in favour of an electronic shutter. In some embodiments, the lens 202 is a fixed focal length lens, in which case the focus adjuster 214 merely adjusts the focusing distance of the lens. In other embodiments, the lens 202 could be a variable focal length lens (also known as a "zoom" lens). Digital zoom may be provided by digital image processing performed by the image signal processor 230 of the image capture assembly 200 or processor 102 (rather or in addition to the optical zoom provided by a zoom lens).

The image signal processor (ISP) 230 controls the image sensor 208 by supplying various control signals to the image sensor 208. The ISP 230 also controls the focus adjuster 214 and a flash 224 for emitting light to illuminate a scene being captured by the lens 202. The input devices 105 provide user controls which can be used to control the operation of the image capture assembly 200. The ISP 230 also determines the amount of available light and the length of the exposure time required to capture an image based on the amount of available light and other settings. The ISP 230 can activate the flash 224 to increase the amount of available light. Alternatively, a separate exposure detector (not shown) may be used to determine the amount of available light and the length of exposure rather than the ISP 230.

A digital image signal A is output from the image sensor 208 to the ISP 230, for example, for basic image processing. A digital image signal B may be output to a buffer memory 212, such as a Dynamic random-access memory (DRAM) buffer memory, for more time consuming, advanced image processing. While shown as part a separate element, the buffer memory 212 may be part of the ISP 230 in some embodiments.

The ISP 230 produces focus signals which drive the focus adjuster 214 (e.g., focus motors) to adjust the focus of an image providing the image sensor output for the image signal in response to capture input such as the activation of a capture button. A passive autofocus system is typically provided by the image capture assembly 200. In the passive autofocus system, the ISP 203 performs autofocus calculations on the digital image signal A. Focus signals are sent to the focus adjuster 214 to adjust the focus distance of the lens 202 as necessary as a result of the output the autofocus calculations. The autofocus calculations are typically performed using either contrast detection or phase detection methods which rely on moving the lens 202 to make minor adjustments in the focus distance until a maximal (or optimal) contrast is obtained. The autofocus calculations assume that maximal (or optimal) contrast corresponds to maximal sharpness. The nature of the autofocus calculations is outside the scope of the present disclosure and will not be described in further detail herein. Autofocus methods and calculations suitable for use by the ISP 230 are well known in the art and will be readily known to the skilled person.

In other embodiments, an active autofocus system could be used instead of the passive autofocus system described above. The active autofocus system may include an IR emitter and IR sensor which determines a distance from the IR emitter to an object at the focus point using the time for reflected IR waves to return to the IR sensor and/or the intensity of the reflected IR waves. The focus adjuster 214 moves the lens 202 in accordance with the determined distance to the object at the focus point.

The ISP may also output a processed image to the display 112 to provide a preview image that may be used to provide a real-time or "live" preview in which a real-time image (or an approximation of an image) of the image captured with the image sensor 208 is displayed on the display 112 as a thumbnail (e.g., reduced size and/or reduced image resolution image) of the captured image for graphical processing efficiency. Alternatively, the preview image may be displayed in a dedicated electronic viewfinder device depending on the features of the host electronic device 100.

The ISP 230 may perform various other image processing functions, including color interpolation and color and tone correction to generate processed image data, such as standard Red Green Blue (sRGB) image data. The ISP 230 may also perform noise filtering and/or edge/detail enhancement. The ISP 230 also encodes the processed image data to generate an encoded digital image file. The image data may also be compressed prior to, or as a part of, the encoding. Alternatively, in other embodiments the image encoding could be performed by a dedicated image encoder rather than the ISP 230. Non-limiting examples of the encoding that can be performed are JPEG (Joint Photographic Experts Group), JPEG 2000, TIFF (Tagged Image File Format), and Exif (Exchangeable image file format) encoding. The encoded digital image files are then stored in the memory of the removable memory card 132 or persistent memory 120 (Figure 1). Preferably, the encoded digital image file is in a format which supports image metadata, such as one or more of a date/time the image was captured, f-number of the lens 202 at which the image was captured, GPS location, pointing direction when the image was captured and possibly other camera settings.

### IR Filter

Example embodiments of the IR filter 204 of the present disclosure will now be described. As noted above, light received by the lens 202 passes through the IR filter 204 which reflects, absorbs or blocks most, if not all, wavelengths of near-infrared light to which the image sensor 208 is sensitive while passing most, if not all, wavelengths of visible IR light.

The visible light spectrum is comprised of wavelengths between approximately 400 nm-700 nm and the IR spectrum is comprised of wavelengths between approximately 700 nm- 1 mm (including near-infrared (NIR) between 700 nm - and 1400 nm, short-wavelength infrared (SWIR) between 1.4-3 µm, mid-wavelength infrared (MWIR) between 3-8 µm, long-wavelength infrared (LWIR) between 8-15 µm, and far infrared (FIR) between 15-1,000 µm). Depending on the particular image sensor 208 which is used, the image sensor 208 may be sensitive to near-infrared wavelengths up to approximately 1,000-1,200 nm. The IR filter 204 should reflect or block wavelengths of near-infrared light to which the image sensor 208 is sensitive, i.e. 700 nm - 1,000, preferably 700 - 1,200 nm. Other wavelengths of the IR spectrum are can pass without adversely affecting camera image quality.

In some embodiments, the IR filter 204 is comprised of a substrate coated with a reflective coating on a first side (e.g., facing the lens 202) and an anti-reflective coating on a second side opposite to the first side (e.g., facing away from the lens 202 and towards the image sensor 208). In other embodiments, the substrate can be coated with an anti-reflective coating on each side. In yet other embodiments, the coatings may be designed to feature other optical functions, such as reflecting UV light (i.e. light with lower wavelength than 400 nm). The reflective and anti-reflective or other optical coatings described here are applied using thin-film deposition techniques - either physical deposition or chemical deposition depending on the coating material.

In some embodiments, the improved IR filter described in the present disclosure can be replaced by an improved optical grade plate having no IR filtering feature. For example, it can be a sensor protective plate without any optical function, or an optical grade plate having a different optical function from IR filtering, for example but not limited to, filtering only UV light or an infrared filter featuring an extra narrow-band IR transmittance. In these alternatives, the optical grade plate protects the image sensor 208 and the IR filter 206 is removed or placed somewhere else in the lens stack up.

### Substrate

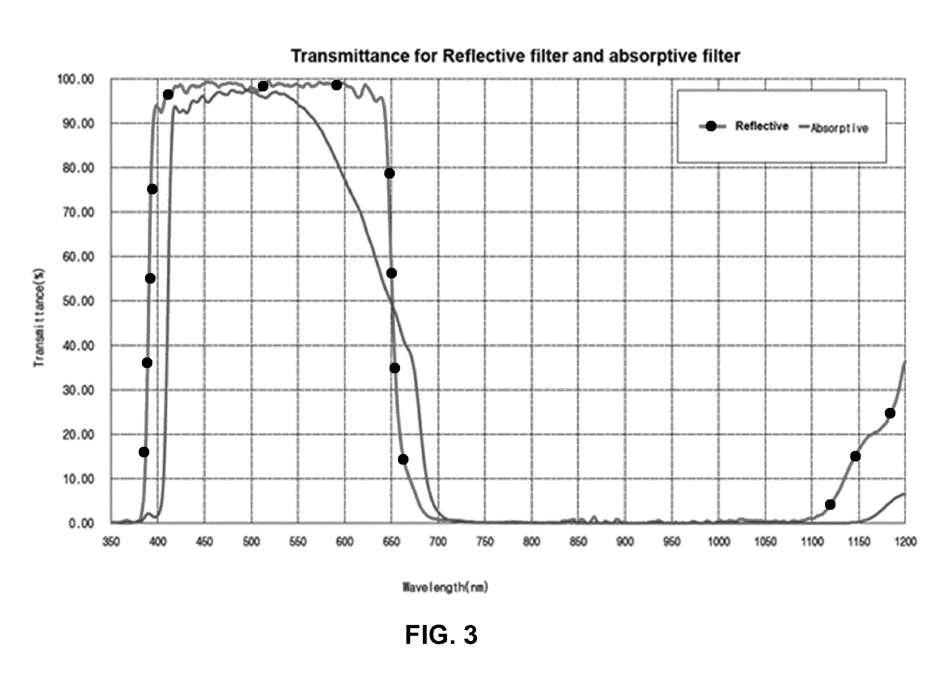

The IR filter 204 may be a reflective IR filter in some embodiments and may be an absorptive IR filter in other embodiments. A reflective IR filter has a substrate which is transparent over the full visible spectrum whereas an absorptive IR filter has a substrate which absorbs part of the light in the visible spectrum above 550 nm, and a higher part or all the light in the spectrum above 700 nm. The substrate of an absorptive IR filter is typically blue. Figure 3 is a graph illustrating the transmittance of an example reflective IR filter and an example absorptive IR filter at different wavelengths in the visible and near-infrared spectrum. The optical performance of the IR filter 204 varies based on the particular substrate and the particular optical coatings, example combinations of which are described later below.

Parameters for a suitable substrate in accordance with example embodiments of the present disclosure will now be described. The substrate should have a transmittance (T) greater than 0.85 over most or all of the visible range. Optionally, the substrate can have a transmittance of greater than 0.85 over the visible range excluding the red portion of the visible spectrum if the substrate is tinted blue (i.e., a blue substrate is used). A typical visible range excluding the red portion of the visible spectrum is 400 nm to 600 nm. For example, part of the red portion of the visible spectrum and all the near-infrared may be absorbed by the substrate and the resultant digital image can undergo color and/or tone correction by the ISP 230 to compensate for the partial loss of red in the digital image due to the absorption of red light by the substrate.

The substrate should have surfaces which are parallel enough not to impact camera image quality more than a threshold amount, and should have surfaces which are flat and smooth enough not to impact camera image quality (roughness and flatness) more than a threshold amount. The transition temperature of the substrate should also be higher than the temperatures used during camera manufacture processes and during camera use (typically under 95°C, however processes could be adapted if necessary).

The substrate should also not cause haze which would impact camera image quality more than a threshold amount (e.g., haze under 2%). The hazing caused by temperature and humidity during camera manufacturing processes should not impact the camera image quality more than a threshold amount (e.g., 95°C, 55% relative humidity (RH) over a duration of a few minutes). A reversible haze caused during manufacture may be acceptable. The hazing and aging caused by regular use should not impact the camera image quality more than a threshold amount (e.g., use at under 60°C and under 60% RH over 500 hours or based on other temperature and humidity reliability tests).

The substrate should also be rigid enough for coating at a sample size of at least a few mm to hundreds of mm. Preferably, the substrate can be coated on the scale of a full sheet.

The substrate should optionally be either flexible or non-brittle enough (or both) to improve reliability performance compared to conventional filter substrates such as blue glass. Alternatively, the substrate need not have improved flexibility or reliability performance if the cost and thickness are sufficiently reduced.

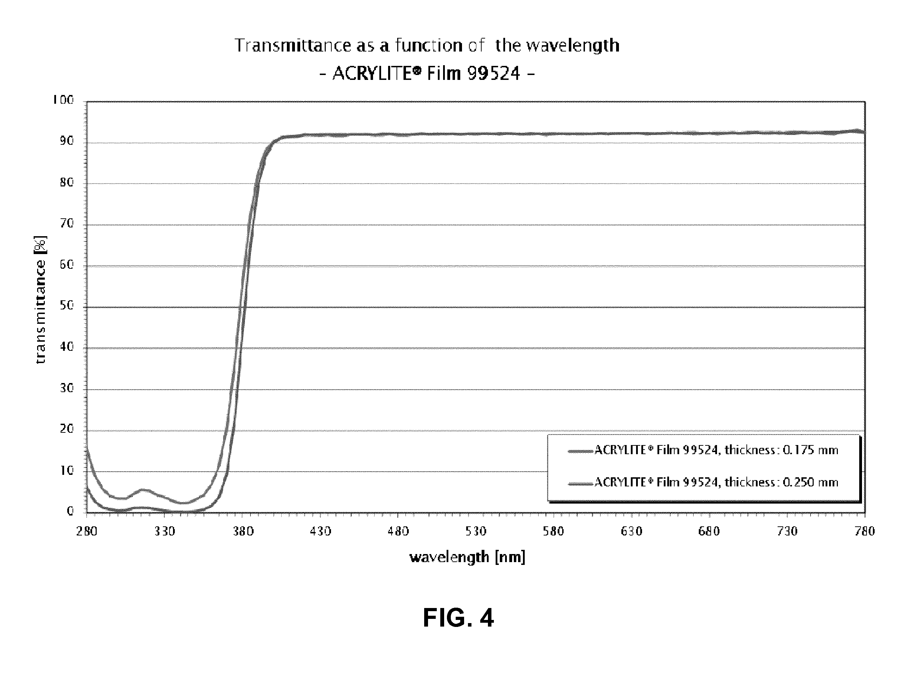

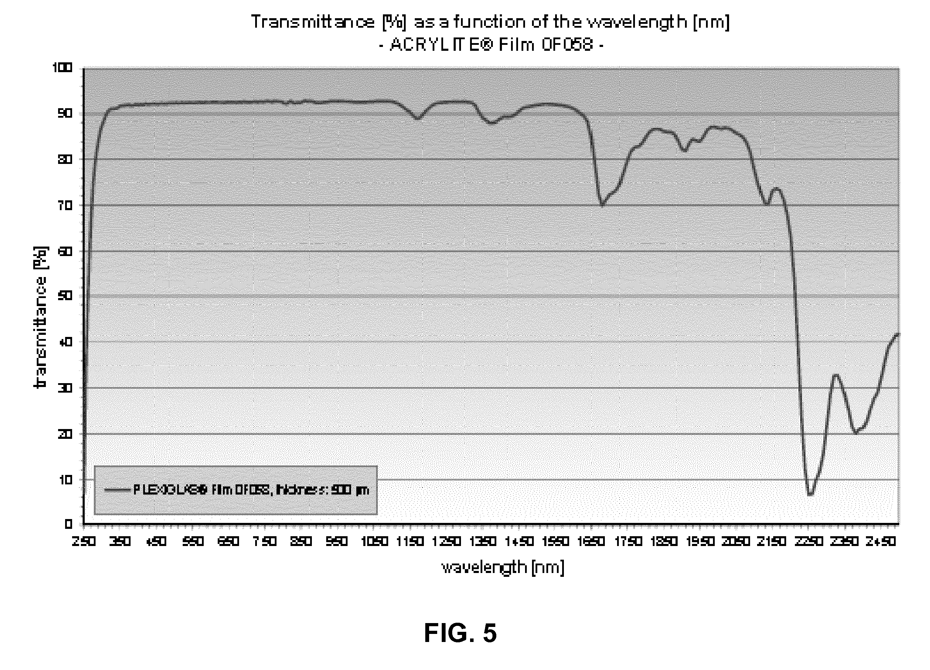

An example of a substrate which satisfies the design parameters described above is optical grade poly(methyl methacrylate) (PMMA) film. Most optical grade PMMA films have a T of approximately 0.92 over most or all of the visible range, most of the loss coming from the reflectance on each surface, which can be improved by anti-reflection coatings. Optical grade PMMA films may comprise PMMA and optionally additives which may include, but are not limited to, dyes to tint the substrate blue or comonomers (e.g.,. butyl acrylate) or plasticizers to improve physical properties such as impact strength. Examples of optical grade PMMA films include PMMA films sold by Evonik Industries (Essen, North Rhine-Westphalia, Germany) under the trade-mark ACRYLITE® trademark in North, Central and South American continents, and sold under the trade-mark PLEXIGLAS® in the European, Asian, African and Australian continents, and in particular ACRYLITE®/PLEXIGLAS® Film 0F0S8 and ACRYLITE®/PLEXIGLAS® Film 99524. Figure 4 is a graph illustrating the transmittance of ACRYLITE®/PLEXIGLAS® Film 99524 at different wavelengths in the visible and near-infrared spectrum. Figure 5 is a graph illustrating the transmittance of ACRYLITE®/PLEXIGLAS® Film 0F058 at different wavelengths in the visible and near-infrared spectrum. The thickness of the optical grade PMMA film is 175 µm (0.175 mm) in some example embodiments, and 200 µm (0.2 mm) in other example embodiments. Thinner or thicker films can be designed.

PMMA is more flexible and less brittle than conventional filter substrates and is, therefore, more durable, more reliable and more robust than conventional equivalents under certain durability conditions. This can be contrasted with conventional filter substrates which sometimes fail drop and tumble or other durability tests at larger thickness (0.3 mm thick or more) since conventional filter substrates are too brittle. A chip can easily cause the IR filter to crack with device impacts and/or high accelerations. A crack in the IR filter makes the camera effectively useless because the cracks will be visible on the resultant image.

Another example of a substrate which satisfies the design parameters described above is sapphire glass. Sapphire glass is stronger and less brittle than conventional filter substrates but has low yield at desired thicknesses and is more expensive than PMMA and conventional filter substrates. Most sapphire glass has a T of greater than 0.85 over most or all of the visible range. Sapphire glass is harder than conventional filter substrates and is, therefore, more durable, more reliable and more robust than conventional equivalents.

### IR Reflective Coating

The IR reflective coating reflects near-infrared and possibly part of the red portion of the visible spectrum. When the red portion of the visible spectrum is reflected along with near-infrared, the reflective coating reflects wavelengths of 600-700 nm and higher. The reflective coating is a multilayer coating which, in some embodiments, may comprise a periodic layer system composed from two materials, one material having a high index of refraction, such as zinc sulfide (ZnS) (n=2.32) or titanium dioxide (TiO₂) (n=2.4), and the other material having a low index of refraction, such as magnesium fluoride (MgF₂) (n=1.38), or silicon dioxide (SiO₂) (n=1.49). The use of a periodic layer system can provide a band-stop filter which enhances the reflectivity of the surface of the substrate over a specific wavelength range or "band" while the maximum reflectivity increases up to nearly 100% with the number of layers in the stack. The reflective coating can achieve 99.9% reflectivity over a broad wavelength range in the visible spectrum range depending on the thickness and composition of the layers in the reflective coating.

### Anti-Reflective Coating

The anti-reflective coating is used to reduce the reflection of filtered light exiting the substrate. Whenever light moves from one medium to another, a portion of the light is reflected from the surface (known as the interface) between the two media. The anti-reflective coating maximizes transmission and minimizes reflection of the filtered light exiting the substrate. The anti-reflective coating may be a single layer in some embodiments, such as a single layer of MgF₂. With such coatings, reflection as low as 2% or better can be achieved on the full visible range. MgF₂ forms a durable coating and can be easily applied to the substrate using physical vapour deposition.

Alternatively, in other embodiments the anti-reflective coating may be a multi-layer coating having alternating layers of a material having a low index of refraction and a material having a high index of refraction so that reflections from the surfaces undergo maximum destructive interference, thereby working in a manner opposite to the reflective coating. By using two or more layers, broadband anti-reflection coatings which cover the visible range (400-700 nm) with maximum reflectivities of less than 0.5% may be achieved. Reflection in narrower wavelength bands can be as low as 0.1%. Alternatively, a series of layers with small differences in refractive index can be used to create a broadband anti-reflective coating by means of a refractive index gradient.

The IR filters 204 described above are thinner than conventional IR filters, and in some embodiments, are less brittle, more reliable and more durable than conventional IR filters. This allows for the construction of a thinner image capture assembly, a thinner digital camera and a thinner host electronic device. In addition, the image capture assembly, digital camera and host electronic device may be more durable, more reliable and more robust than conventional equivalents depending on the substrate which is used.

### Host Electronic Device

Reference is next made to Figure 1 which illustrates an example embodiment of the host electronic device 100. In the example embodiment, the host electronic device 100 is a portable electronic device; however, the host electronic device 100 could be any electronic device incorporating a digital camera, including but not limited to a webcam, television, display, all-in-one computer, video game console (such as PlayStation™ from Sony Computer Entertainment, an Xbox from Microsoft Corporation, or Wii from Nintendo Co., Ltd.), or controller from any of these devices (such as a gaming controller such as Kinect™ from Microsoft Corporation) which incorporates a digital camera, whether the digital camera is a still camera, video camera or a hybrid camera with both video and still capabilities.

In the following example embodiment, the host electronic device 100 is hereinafter referred to as merely an electronic device 100 for convenience. The electronic device 100 described below has wireless communication capabilities; however, it is contemplated that the teachings of the present disclosure may be applied to devices without wireless communication capabilities. Examples of the electronic device 100 include, but are not limited to, a mobile phone, smartphone or superphone, tablet computer, notebook computer (also known as a laptop, netbook or ultrabook computer depending on the device capabilities), wireless organizer, personal digital assistant (PDA), mobile gaming device, special purpose digital camera or wearable computer such as a smartwatch or optical head-mounted display (OHMD) such as Google Glass™ from Google Inc.

The electronic device 100 includes a rigid case (not shown) housing the electronic components of the electronic device 100. The electronic components of the electronic device 100 are mounted on a printed circuit board (not shown). The electronic device 100 includes a controller comprising at least one processor 102 (such as a microprocessor) which controls the overall operation of the electronic device 100. Communication functions, including data and voice communications, are performed through a communication subsystem 104. Data received by the electronic device 100 may be decompressed and decrypted by a decoder 106. The communication subsystem 104 receives messages from and sends messages to a wireless network 101. The wireless network 101 may be any suitable type of wireless network.

The processor 102 interacts with other components, such as one or more input devices 105, Random Access Memory (RAM) 108, Read Only Memory (ROM) 110, a display 112 such as a color liquid crystal display (LCD), persistent (non-volatile) memory 120 which may be flash erasable programmable read only memory (EPROM) memory ("flash memory") or any other suitable form of memory, an image capture assembly 200, a motion sensor 180 which enables the processor 102 to determine whether the electronic device 100 is in motion and the nature of any sensed motion at any appropriate time, e.g., when an image is captured, an orientation sensor 182 which enables the processor 102 to determine which direction the electronic device 100 is pointed at any appropriate time, e.g., when an image is captured, global positioning system (GPS) device 184 which enables the processor 102 to determine GPS coordinates (i.e., location) of the electronic device 100 at any appropriate time, e.g., when an image is captured, auxiliary input/output (I/O) subsystems 150, data port 152 such as serial data port (e.g., Universal Serial Bus (USB) data port), speaker 156, microphone 158, short-range communication subsystem 162, and other device subsystems generally designated as 164. The components of the electronic device 100 are coupled via a communications bus (not shown) which provides a communication path between the various components.

The display 112 may be provided as part of a touch-sensitive display which provides an input device 105. The display 112 which together with a touch-sensitive overlay (not shown) operably coupled to an electronic controller (not shown) comprise the touch-sensitive display. The touch-sensitive display is typically a capacitive touch-sensitive display which includes a capacitive touch-sensitive overlay may be any other suitable touch-sensitive display, such as a resistive, infrared, surface acoustic wave (SAW) touch-sensitive display, strain gauge, optical imaging, dispersive signal technology, acoustic pulse recognition, and so forth, as known in the art. The overlay of the touch-sensitive display may be an assembly of multiple layers in a stack which may include, for example, a substrate, a ground shield layer, a barrier layer, one or more capacitive touch sensor layers separated by a substrate or other barrier, and a cover. The capacitive touch sensor layers may be any suitable material, such as patterned indium tin oxide (ITO).

User-interaction with the GUI is performed through the input devices 105. Information, such as text, characters, symbols, images, icons, and other items are rendered and displayed on the display 112 via the processor 102. The processor 102 may interact with the orientation sensor to detect direction of gravitational forces or gravity-induced reaction forces so as to determine, for example, the orientation of the electronic device 100 in order to determine a screen orientation for the GUI.

The input devices 105 may include a keyboard, control buttons such as a power toggle (on/off) button (not shown), a camera button (not shown) for enabling a camera mode, a capture button (not shown) for enabling an image capture sequence when in the camera mode, one or more zoom buttons (not shown) for enabling a selection of a zoom setting when in the camera mode, and a navigation device (not shown) for navigating through stored data, such as digital images, menu choices and the like which are displayed on the display 112. When the display 112 is provided as part of a touch-sensitive display, the capture button, zoom button and other camera controls may be provided by onscreen user interface elements displayed on the display 112 instead of, or in addition to, physical interface components. The keyboard may be provided instead of, or in addition to, a touch-sensitive display depending on the embodiment. At least some of the control buttons may be multi-purpose buttons rather than special purpose or dedicated buttons.

The electronic device 100 also includes a memory card interface 130 for receiving a removable memory card 132 comprising persistent memory, such as flash memory. A removable memory card 132 can be inserted in or coupled to the memory card interface 130 for storing and reading data by the processor 102 including, but not limited to still images and optionally video images captured by the image capture assembly 200. Other types of user data may also be stored on the removable memory card 132. Other types of removable digital image storage media, such as magnetic hard drives, magnetic tape, or optical disks, may be used in addition to, or instead of, the removable memory card 132.

The processor 102 operates under stored program control and executes software modules 175 stored in memory, for example, in the persistent memory 120. As illustrated in Figure 1, the software modules 175 comprise operating system software 177 and software applications 179. The software applications 179 include a camera application 181 and photo viewer application 183. The camera application 181 contains the logic for operating the image capture assembly 200 and capturing still images and optionally video images from the image capture assembly 200 and storing the still images and video images in the persistent memory 120. The photo viewer application 183 contains logic for displaying data (i.e., still images and optionally video images) from the persistent memory 120 and data from the image capture assembly 200 on the display 112. Persistent data 185, such as user data, can also be stored in the persistent memory 120. The persistent data 185 may include digital media files stored in the electronic device 100 such as still images and/or video images captured by the image capture assembly 200, or other still images and/or video images transferred, downloaded or otherwise stored on the persistent memory 120.

The software modules 175 or parts thereof may be temporarily loaded into volatile memory such as the RAM 108. The RAM 108 is used for storing runtime data variables and other types of data or information. Although specific functions are described for various types of memory, this is merely one example, and a different assignment of functions to types of memory could also be used.

Still images and optionally video images captured by the image capture assembly 200 are stored in persistent memory. The persistent memory may be one or any combination of the internal persistent memory 120, the removable memory card 132 or remote persistent storage. The remote persistent storage may be a cloud-based resource, such as a remote content server, accessible by the wireless network 101 or possibly via a wireline (e.g., via the data port 152) or short-range wireless connection (e.g., via the short-range communication subsystem 162) to a host computer having wireline access to the cloud-based resource. The location at which captured still images and optionally video images is stored is typically a configurable setting which may be set by a user either in advance or at the time of capture.

The camera application 181 and/or photo viewer application 183 can access the remote persistent storage and optionally cloud-based applications through the wireless network 101 or possibly via a wireline or short-range wireless connection to a host computer having wireline access to the cloud-based resource. The use of cloud-based or other remote persistent storage allows access to still images and optionally video images captured by the image capture assembly 200 from nearly any computer or portable electronic device having access to the Internet.

The electronic device 100 also includes a battery 138 as a power source, which is typically one or more rechargeable batteries that may be charged, for example, through charging circuitry coupled to a battery interface such as the serial data port 152. The battery 138 provides electrical power to at least some of the electrical circuitry in the electronic device 100, and the battery interface 136 provides a mechanical and electrical connection for the battery 138. The battery interface 136 is coupled to a regulator (not shown) which provides power V+ to the circuitry of the electronic device 100.

A received signal, such as a text message, an email message, or web page download, is processed by the communication subsystem 104 and input to the processor 102. The processor 102 processes the received signal for output to the display 112 and/or to the auxiliary I/O subsystem 150. A subscriber may generate data items, for example email messages, which may be transmitted over the wireless network 101 through the communication subsystem 104, for example.

The motion sensor 180 may comprise an accelerometer (such as a three-axis accelerometer) or other suitable motion sensor. The orientation sensor 182 may comprise an accelerometer (such as a three-axis accelerometer), electronic compass, gyroscope, or a combination thereof. Other suitable orientation sensors could be used instead of, or in addition to, the accelerometer, electronic compass and gyroscope. The motion sensor 180 and orientation sensor 182, or parts thereof, may be combined or shared, for example, within an integrated component. The processor 102, or controller (not shown) of a three-axis accelerometer, can convert acceleration measurements into device orientations.

The electronic device 100 may connect to a host personal computer (not shown) via the serial data port 152 or short-range communication subsystem 162 communicating over a suitable interconnection, such as a USB connection, Firewire™ connection, Bluetooth™ connection or the like.

While the components of the electronic device 100 are shown as separate blocks in Figures 1 and 2, the functions of various components may be combined in actual processing elements, circuits and the like. Furthermore, some of the functional blocks of Figures 1 and 2 may be separated into one or more sub blocks when implemented in actual processing elements, circuits and the like.

The present disclosure may be embodied in other specific forms without departing from the subject matter of the claims. The described example embodiments are to be considered in all respects as being only illustrative and not restrictive unless otherwise stated. The scope of protection being sought is defined by the following claims rather than the described embodiments in the foregoing description. The scope of the claims should not be limited by the embodiments set forth in the examples, but should be given the broadest interpretation consistent with the description as a whole.

## Claims

1. An image capture assembly, comprising:
a lens;
an image sensor;
an optical grade plate disposed between the lens and the image sensor,
wherein the plate comprises a substrate which material is selected from poly(methyl methacrylate) (PMMA) and sapphire glass; and
an image signal processor coupled to the image sensor, wherein the image signal processor is configured to process data provided by the image sensor to generate a digital image.

2. The image capture assembly of claim 1, wherein the substrate is an optical grade PMMA film.

3. The image capture assembly of claim 1, wherein the substrate is sapphire glass.

4. The image capture assembly of any of claims 1 to 3, wherein the substrate has a thickness of less than 0.4 mm.

5. The image capture assembly of claim 4, wherein the substrate has a thickness of less than 0.3 mm.

6. The image capture assembly of claim 5, wherein the substrate has a thickness of approximately 0.2 mm.

7. The image capture assembly of claim 5, wherein the substrate has a thickness of approximately 0.175 mm.

8. The image capture assembly of any preceding claim, wherein the optical grade plate has an optical function of an infrared filter, wherein the substrate has a reflective coating on a first side disposed towards the lens and an anti-reflective coating on a second side disposed towards the image sensor.

9. The image capture assembly of any of claims 1 to 7, wherein the optical grade plate has no optical function, wherein the substrate has an anti-reflective coating on each side.

10. The image capture assembly of any of claims 1 to 7, wherein the optical grade plate has an optical function different than an infrared filter.

11. The image capture assembly of any of claims 1 to 7, wherein the optical grade plate has an optical function of UV filtering or extra narrow-band IR transmittance.

12. A camera, comprising:
a processor;
an image capture assembly in accordance with any one of claims 1 to 11 coupled to the processor.

13. A mobile communication device, comprising:
a processor;
an image capture assembly in accordance with any one of claims 1 to 11 coupled to the processor.
